(19)

Europäisches
Patentamt
European
Patent Office
Office européen
des brevets

(11)     **EP 2 259 561 A1**

(12)     **EUROPEAN PATENT APPLICATION**

(43) Date of publication:
    **08.12.2010 Bulletin 2010/49**

(51) Int Cl.:
    ***H04M 1/60*** *(2006.01)*     ***G10L 21/02*** *(2006.01)*

(21) Application number: **10164102.5**

(22) Date of filing: **27.05.2010**

(84) Designated Contracting States:
    **AL AT BE BG CH CY CZ DE DK EE ES FI FR GB
    GR HR HU IE IS IT LI LT LU LV MC MK MT NL NO
    PL PT RO SE SI SK SM TR**
    Designated Extension States:
    **BA ME RS**

(30) Priority: **03.06.2009 JP 2009134438**

(71) Applicant: **FUJITSU LIMITED**
    **Kawasaki-shi,**
    **Kanagawa 211-8588 (JP)**

(72) Inventors:
    • **Endo, Kaori**
        **Kawasaki-shi Kanagawa 211-8588 (JP)**
    • **Hishitani, Masato**
        **Kawasaki-shi Kanagawa 211-8588 (JP)**

    • **Nishiike, Rika**
        **Kawasaki-shi Kanagawa 211-8588 (JP)**
    • **Kawai, Chiharu**
        **Kawasaki-shi Kanagawa 211-8588 (JP)**
    • **Sasaki, Hitoshi**
        **Kawasaki-shi Kanagawa 211-8588 (JP)**
    • **Matsubara, Mitsuyoshi**
        **Fukuoka-shi Fukuoka 814-8588 (JP)**
    • **Wakamatsu, Takashi**
        **Kawasaki-shi Kanagawa 211-8588 (JP)**
    • **Chujo, Kaoru**
        **Kawasaki-shi Kanagawa 211-8588 (JP)**

(74) Representative: **Lewin, David Nicholas**
    **Haseltine Lake LLP**
    **Lincoln House, 5th Floor**
    **300 High Holborn**
    **London WC1V 7JH (GB)**

(54)     **Portable radio communication device and control method thereof**

(57)     A portable radio communication device (10) includes a sound input unit (160) that acquires a sound and converts the sound into an electrical signal, a situation detecting unit (170) that detects the situation of the portable radio communication device (10), and a control unit (180) that controls the sound input unit (160) in accordance with the detection result of the situation detecting unit (170).

    For example, the situation detecting unit (170) detects the inclination of the portable radio communication device (10) and the control unit (180) controls the directivity of the sound input unit (160) in accordance with the inclination detected by the situation detecting unit (170).

FIG.8

EP 2 259 561 A1

## Description

FIELD

The embodiments discussed herein are directed to a portable radio communication device and a control method thereof.

BACKGROUND

In recent years, with the development of miniaturization of a mobile phone unit, the distance between the mouth of the user and the microphone of the mobile phone unit during the call has increased. For this reason, it is harder for the microphone of the mobile phone unit to pick up the voices of the user during the call. On the other hand, it is easier for the microphone to pick up surrounding noises and thus it is harder for a call partner to hear the voice of the user.

To solve such a problem, a mobile phone device that can make a microphone movable so as to turn the microphone toward the mouth of a user in accordance with the operation of the user has been proposed. If the microphone can be turned toward the mouth of the user, it is easier for the microphone to pick up the voice of the user and it is harder to pick up surrounding noises. For example, the technique has been known as disclosed in Japanese Laid-open Patent Publication No. 2000-270067.

However, a mobile phone unit is held in different ways depending on the situation. For example, even if a person usually holds a mobile phone unit in the right hand, the person has to hold the mobile phone unit in the left hand to speak over the phone in a situation where the person is carrying a load in the right hand. In this way, because the way a mobile phone unit is held changes depending on the situation, a caller that uses the mobile phone unit according to the above-described conventional art must change the direction of the microphone in accordance with the way he or she is holding the mobile phone unit in order to send a clear voice to a call partner, and thus operations are complicated.

Accordingly, there is a significant need for technology, applicable to portable radio communication devices such as mobile phones, which is capable of improving the quality of input voices in accordance with the situations of the portable radio communication devices. It is an object in one aspect of an embodiment of the invention to provide a portable radio communication device and a control method thereof.

SUMMARY

According to an aspect of an embodiment of the invention, a portable radio communication device includes a sound input unit that acquires a sound and converts the sound into an electrical signal; a situation detecting unit that detects a situation of the device; and a control unit that controls the sound input unit in accordance with the detection result of the situation detecting unit.

BRIEF DESCRIPTION OF THE DRAWINGS

FIG. 1 is a block diagram illustrating the configuration of a portable radio communication device according to the present embodiment;
FIG. 2 is a diagram illustrating the time difference of voice;
FIG. 3 is a diagram illustrating an angle formed by an input signal;
FIG. 4 is a diagram illustrating a gain by which directivity is set to a target direction;
FIG. 5 is a diagram illustrating the correspondence between a taking hand and an inclination;
FIG. 6 is a diagram illustrating the determination logic of a taking hand in the case of one axis;
FIG. 7 is a diagram illustrating the determination logic of a taking hand in the case of three axes;
FIG. 8 is a diagram illustrating a sound collecting direction and a sound collecting range;
FIG. 9 is a diagram illustrating the configuration procedure of a sound collecting direction and a sound collecting range;
FIG. 10 is a diagram illustrating the deviance of inclination;
FIG. 11 is a diagram illustrating an example of the correspondence between the deviance of inclination and a performance value;
FIG. 12 is a diagram illustrating an example of the correspondence between the frequency of swing and a performance value;
FIG. 13 is a diagram illustrating an example of the correspondence between a moving speed and a performance value;
FIG. 14 is a diagram illustrating an example of the correspondence between an acceleration and a performance value;
FIG. 15 is a diagram illustrating an example of a suppression coefficient of a frequency component;

FIG. 16 is a diagram illustrating an example of an adjustment factor of an input sound pressure;

FIG. 17 is a flowchart illustrating control processing procedures related to directivity;

FIG. 18 is a flowchart illustrating control processing procedures related to frequency characteristics; and

FIG. 19 is a flowchart illustrating control processing procedures related to an input sound pressure.

DESCRIPTION OF EMBODIMENTS

Preferred embodiments of the present invention will be explained with reference to accompanying drawings. The present invention is not limited to the embodiments explained below.

First, it will be explained about the configuration of a portable radio communication device 10 according to the present embodiment. In this case, the portable radio communication device includes various types of information processors such as portable personal computer or PDA (Personal Digital Assistant) that have a radio communication function, in addition to a mobile phone unit.

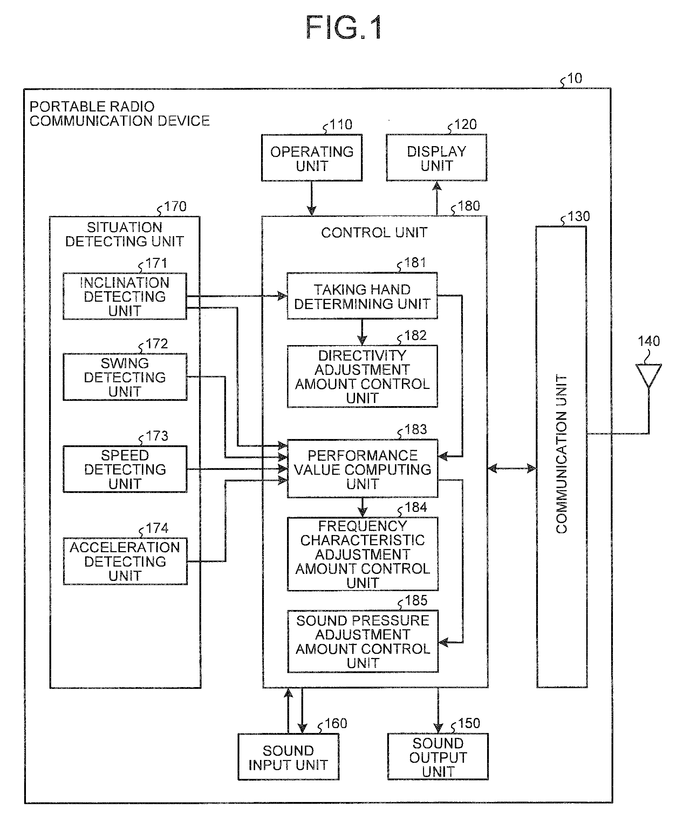

FIG. 1 is a block diagram illustrating the configuration of the portable radio communication device 10 according to the present embodiment. As illustrated in FIG. 1, the portable radio communication device 10 includes an operating unit 110, a display unit 120, a communication unit 130, an antenna 140, a sound output unit 150, a sound input unit 160, a situation detecting unit 170, and a control unit 180.

The operating unit 110 has various types of buttons that receive the operations of a user. The display unit 120 has a display device such as a liquid crystal display that displays characters or images. The communication unit 130 performs radio communication with other devices via the antenna 140. The sound output unit 150 has a speaker or the like that outputs voices during the call as a sound.

The sound input unit 160 acquires voices or the like during the call and converts the voices into electric signals. The sound input unit 160 has a function for adjusting directivity, frequency characteristics, an input sound pressure, and the like in accordance with the control of the control unit 180. Such a function is, for example, realized by using a microphone array.

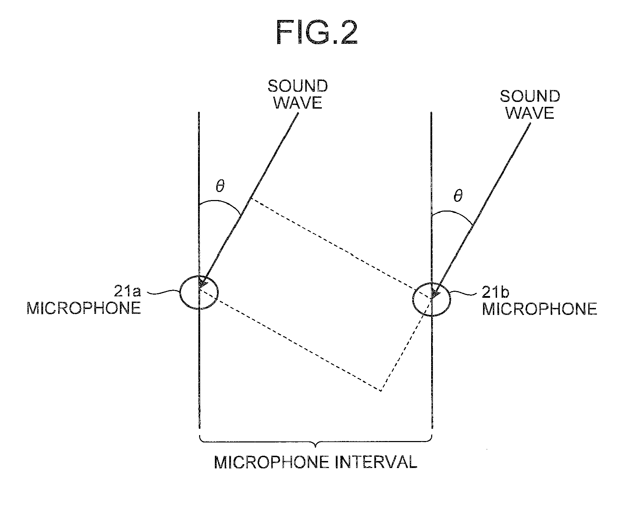

It will be explained about the adjustment of directivity performed in the sound input unit 160 with reference to FIGS. 2 to 5. FIG. 2 illustrates an arrival time interval when a plane wave comes to microphones 21a and 21b from the direction of an angle $\theta$. The signals of the microphones 21a and 21b have the time difference (phase difference) of $\tau(\theta)$ with respect to the signals from the arrival direction $\theta$.

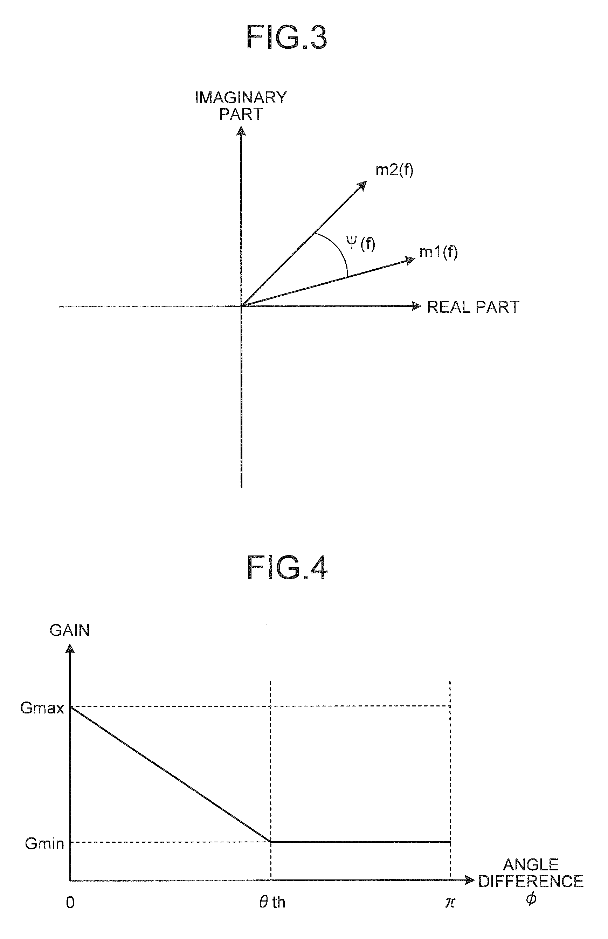

FIG. 3 illustrates a complex spectrum for a certain frequency f among complex spectra that are obtained by time-frequency-converting the signals of the microphones 21a and 21b. In this case, m1(f) and m2(f) respectively express the complex spectra of the frequency f of the microphones 21a and 21b. Because the phase difference $\psi(f)$ of the microphones 21a and 21b is determined by the arrival direction of the signal of the component of the frequency f, the angle difference $\phi(f)$ with the target direction $\theta$ can be computed by measuring the arrival direction.

Equation (1) shows the computation expression of the phase difference $\psi(f)$ of the microphones 21a and 21b and Equation (2) shows the computation expression of the angle difference $\phi(f)$ with the target direction $\theta$.

$$\psi(f) = \frac{R2(f)I1(f) - R1(f)I2(f)}{R1(f)R2(f) + I1(f)I2(f)} \tag{1}$$

$$\phi(f) = \left| \psi(f) - \theta \right| \tag{2}$$

In this case, R1(f) is a real part of a spectrum of the frequency f of the input signal of the microphone 21a and I1(f) is an imaginary part of a spectrum of the frequency f of the input signal of the microphone 21a. Moreover, R2(f) is a real part of a spectrum of the frequency f of the input signal of the microphone 21b and I2(f) is an imaginary part of a spectrum of the frequency f of the input signal of the microphone 21b.

A gain for a spectrum amplitude is computed and is applied to a spectrum amplitude in accordance with an angle difference with a target direction every frequency. Specifically, as illustrated in FIG. 3, the smaller an angle difference with a target direction is, the larger a gain is, and the larger an angle difference with a target direction, the smaller a gain is. By doing so, adjustment is performed in such a manner that sensitivity increases in the target direction and sensitivity decreases as an angle from the target direction increases.

In this way, directivity can be adjusted by setting the target direction $\theta$ and the sensitivity around the target direction $\theta$. Hereinafter, Equation (3) for computing a gain in accordance with the angle $\phi(f)$ from the target direction is shown and Equation (4) and Equation (5) for adjusting a spectrum by using a gain are shown.

$$\begin{cases} G(\phi(f)) = G\,max + \dfrac{(G\,min - G\,max) * \phi(f)}{\theta th} & 0 \leq \phi(f) \leq \theta th \\ G(\phi(f)) = G\,min & \theta th < \phi(f) \end{cases} \quad (3)$$

$$mod\ R(f) = G(\phi(f)) * R(f) \quad\quad (4)$$

$$mod\ I(f) = G(\phi(f)) * I(f) \quad\quad (5)$$

In this case, Gmax is the maximum value of a gain and Gmin is the minimum value of a gain. Moreover, θth is a minimum angle difference at which a gain becomes Gmin. Moreover, R(f) is a real part of a spectrum of the frequency f of the input signal before adjustment and I(f) is an imaginary part of a spectrum of the frequency f of the input signal before adjustment. Moreover, modR(f) is a real part of a spectrum of the frequency f of the input signal after adjustment and modI(f) is an imaginary part of a spectrum of the frequency f of the input signal after adjustment.

Returning to the explanation of FIG. 1, the situation detecting unit 170 includes various types of detecting units such as an inclination detecting unit 171, a swing detecting unit 172, a speed detecting unit 173, and an acceleration detecting unit 174, and detects the situation of the portable radio communication device 10. In this case, the situation detecting unit 170 does not have to entirely include various types of detecting units illustrated in FIG. 1. Moreover, the situation detecting unit 170 may include a detecting unit other than these. Moreover, for example, the inclination detecting unit 171, the swing detecting unit 172, and the acceleration detecting unit 174 may have a sharing part so as to share one acceleration sensor.

The inclination detecting unit 171 is a detecting unit that detects the inclination of the portable radio communication device 10. For example, the inclination detecting unit 171 includes an acceleration sensor, an earth magnetism sensor, a gyroscope, and the like. The swing detecting unit 172 is a detecting unit that detects the frequency of swing of the portable radio communication device 10. For example, the swing detecting unit 172 includes a vibration sensor and an acceleration sensor.

The speed detecting unit 173 is a detecting unit that detects the moving speed of the portable radio communication device 10. The speed detecting unit 173 utilizes, for example, a position detecting means such as GPS (Global Positioning System) in order to detect the moving speed of the portable radio communication device 10. The acceleration detecting unit 174 is a detecting unit that detects the acceleration of the portable radio communication device 10. For example, the acceleration detecting unit 174 includes an acceleration sensor.

The control unit 180 is a control unit that totally controls the portable radio communication device 10. The control unit 180 includes a taking hand determining unit 181, a directivity adjustment amount control unit 182, a performance value computing unit 183, a frequency characteristic adjustment amount control unit 184, and a sound pressure adjustment amount control unit 185.

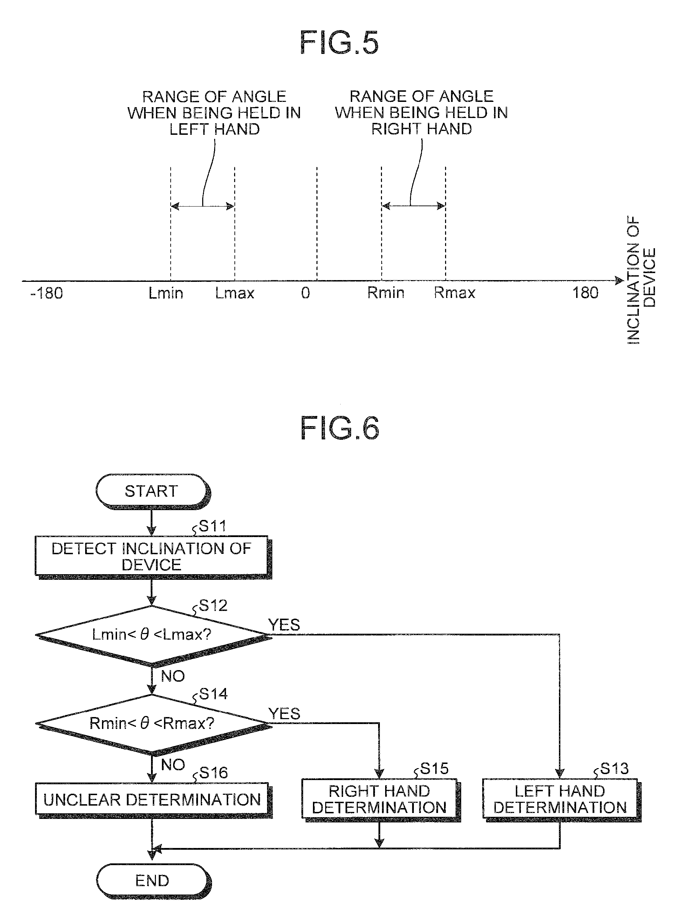

The taking hand determining unit 181 determines which hand holds the portable radio communication device 10 on the basis of the detection result of the inclination detecting unit 171. As illustrated in FIG. 5, the inclination of the portable radio communication device 10 during the call substantially falls within a certain constant range when it is held in the right hand and substantially falls within the other constant range when it is held in the left hand. The taking hand determining unit 181 determines which hand holds the portable radio communication device 10 by comparing the inclination of the portable radio communication device 10 with the ranges.

FIG. 6 is a flowchart illustrating the determination logic of the taking hand determining unit 181 when using a one-axis acceleration sensor. The inclination detecting unit 171 detects the inclination of the portable radio communication device 10 (Step S11). When the detected inclination is between Lmin and Lmax (Step S12: YES), the taking hand determining unit 181 determines that the portable radio communication device 10 is held in the left hand (Step S13).

Moreover, when the detected inclination is between Rmin and Rmax (Step S12: NO and Step S14: YES), the taking hand determining unit 181 determines that the portable radio communication device 10 is held in the right hand (Step S15). Moreover, in the case of the others (Step S12: NO and Step S14: NO), the taking hand determining unit 181 determines that the taking hand of the portable radio communication device 10 is unclear (Step S16).

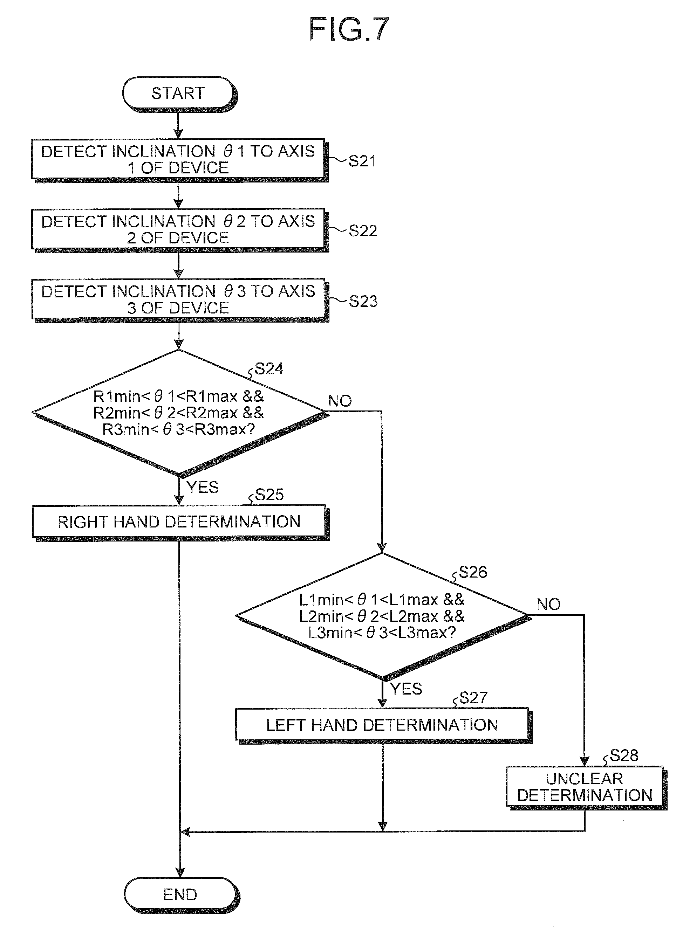

FIG. 7 is a flowchart illustrating the determination logic of the taking hand determining unit 181 when using a three-axis acceleration sensor. The inclination detecting unit 171 detects the inclination θ1 to the axis 1 of the portable radio communication device 10 (Step S21), detects the inclination θ2 to the axis 2 (Step S22), and detects the inclination θ3 to the axis 3 (Step S23). Then, when θ1 is between R1min and R1max, θ2 is between R2min and R2max, and θ3 is between R3min and R3max (Step S24: YES), the taking hand determining unit 181 determines that the portable radio communication device 10 is held in the right hand (Step S25).

Moreover, when θ1 is between L1min and L1max, θ2 is between L2min and L2max, and θ3 is between L3min and L3max (Step S24: NO and Step S26: YES), the taking hand determining unit 181 determines that the portable radio communication device 10 is held in the left hand (Step S27). Moreover, in the case of the others, the taking hand determining unit 181 determines that the taking hand of the portable radio communication device 10 is unclear (Step S28).

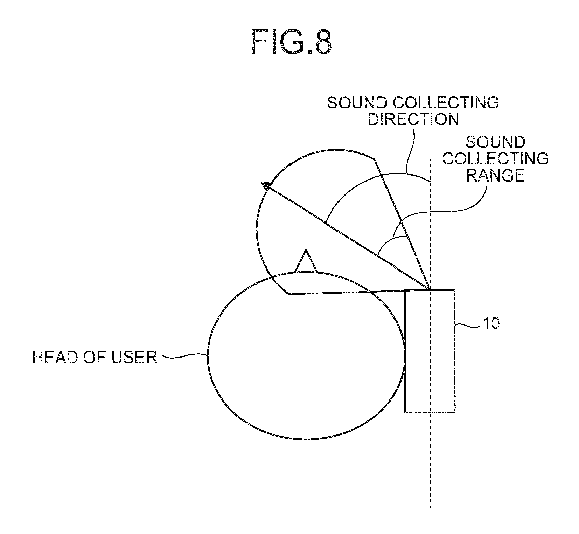

The directivity adjustment amount control unit 182 controls the directivity of the sound input unit 160 on the basis of the determination result of the taking hand determining unit 181. For example, as illustrated by the example of FIG. 8, the directivity adjustment amount control unit 182 controls a sound collecting direction and a sound collecting range. FIG. 8 is a diagram viewed from above illustrating a state where a user holds the portable radio communication device 10 in the right hand and illustrates a sound collecting direction and sound collecting range in this case.

In this case, a sound collecting direction is a direction indicative of the directivity of the sound input unit 160. A sound collecting range is an angle of a range of collecting sounds based on a sound collecting direction. The sound collecting direction and sound collecting range are set to different values in accordance with the determination result of the taking hand determining unit 181 in such a manner the lips of a user fall within the sound collecting range during the call.

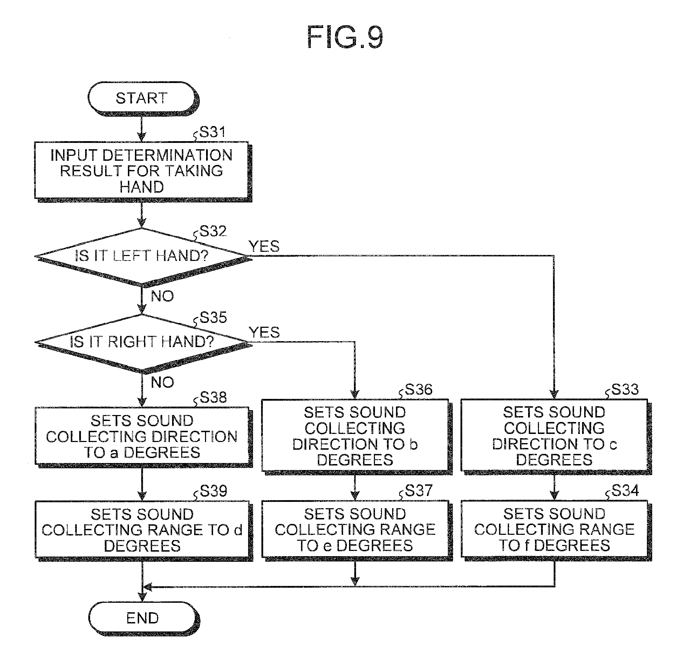

It will be explained about more information of the control executed by the directivity adjustment amount control unit 182 with reference to FIG. 9. As illustrated in FIG. 9, when the determination result of the taking hand determining unit 181 is input (Step S31), the directivity adjustment amount control unit 182 sets a sound collecting direction and a sound collecting range in accordance with the input determination result.

In other words, when the determination result that the portable radio communication device 10 is held in the left hand is input (Step S32: YES), the directivity adjustment amount control unit 182 sets a sound collecting direction to c degrees (Step S33) and sets a sound collecting range to f degrees (Step S34). In this case, because it is preferable that the sound collecting range is limited to the perimeter of the lips of a user, "f" is set to, for example, around 10 to 30 degrees.

Moreover, when the determination result that the portable radio communication device 10 is held in the right hand is input (Step S32: NO and Step S35: YES), the directivity adjustment amount control unit 182 sets a sound collecting direction to b degrees (Step S36) and sets a sound collecting range to e degrees (Step S37). In this case, because it is preferable that the sound collecting range is limited to the perimeter of the lips of a user, "e" is set to, for example, around 10 to 30 degrees.

Moreover, when the determination result that the taking hand of the portable radio communication device 10 is unclear is input (Step S32: NO and Step S35: NO), the directivity adjustment amount control unit 182 sets a sound collecting direction to a degrees (Step S38) and sets a sound collecting range to d degrees (Step S39). In this case, the a degrees of the sound collecting direction and the d degrees of the sound collecting range are previously set to values by which voices can be acquired comparatively favorably even if the portable radio communication device 10 is held in what manner.

As described above, although the portable radio communication device 10 switches the setting of three-pattern directivity in accordance with how to hold it, the portable radio communication device 10 may perform the control further finely. The taking hand determining unit 181 subdivides the comparison range of the inclination of the portable radio communication device 10 and sets a sound collecting direction and a sound collecting range for each subdivided range. By doing so, the control of high-accuracy directivity becomes possible and the quality of the acquired voice is improved.

The performance value computing unit 183 computes a performance value on the basis of the detection result of each detecting unit of the situation detecting unit 170. A performance value is the expected value of the height of the quality of the voice of the user acquired by the sound input unit 160. The higher the quality to be expected is, the higher the value is. Hereinafter, it will be explained about how the performance value computing unit 183 computes an expected value for each detecting unit of the situation detecting unit 170.

As for the inclination, when the portable radio communication device 10 is held in the right hand and when it is held in the left hand, there are respectively inclinations at which voices are acquired with the highest quality. It is considered that the larger the deviance with the inclination is, the lower the quality of the acquired voice is.

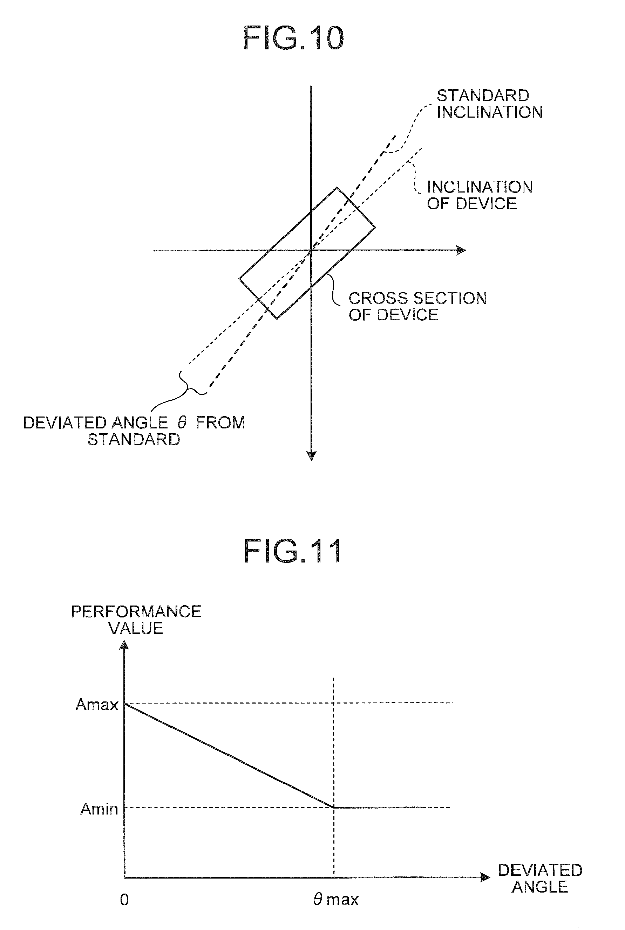

Therefore, as illustrated in FIG. 10, the performance value computing unit 183 calculates the absolute value θ of a deviated angle between a standard inclination predetermined according to the determination result of the taking hand determining unit 181 and the inclination detected by the inclination detecting unit 171. As illustrated by the example of FIG. 11, the performance value computing unit 183 then computes a performance value on the basis of the calculated θ. Specifically, the performance value computed by the performance value computing unit 183 becomes the maximum value Amax when θ is zero and becomes the minimum value Amin when θ becomes θmax or more.

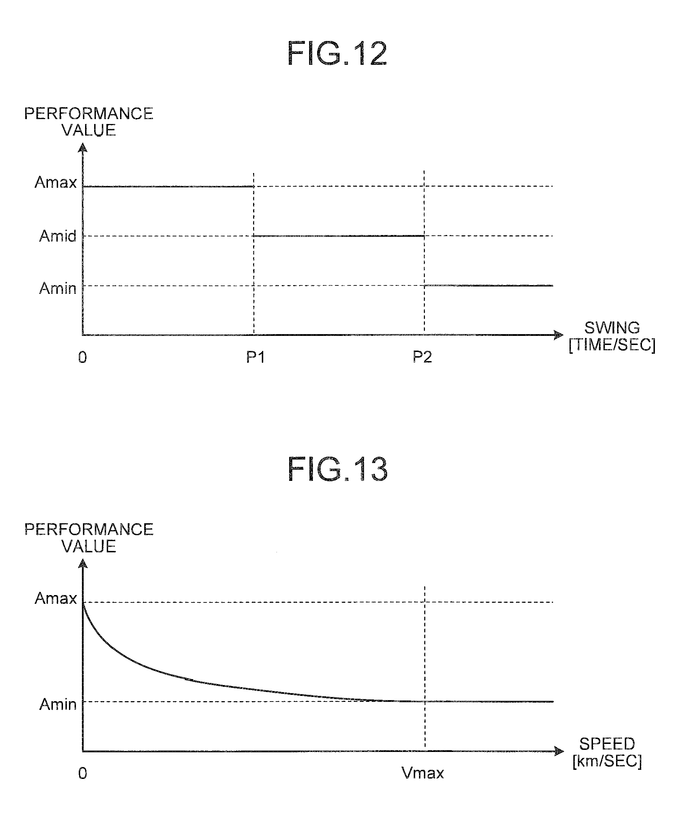

Furthermore, regarding the swing, it is assumed that the more frequently the portable radio communication device 10 swings, the easier it is for the sound input unit 160 to move away from the lips of the user and thus pick up more surrounding noises. Therefore, as illustrated by the example of FIG. 12, the larger the frequency of swing detected by the swing detecting unit 172 is, the lower the performance value computed by the performance value computing unit 183 is.

Furthermore, regarding the speed, it is assumed that the higher the moving speed of the portable radio communication device 10 is, the easier it is for the sound input unit 160 to move away from the lips of the user and thus pick up more surrounding noises. Therefore, as illustrated by the example of FIG. 13, the higher the speed detected by the speed detecting unit 173 is, the lower the performance value computed by the performance value computing unit 183 is.

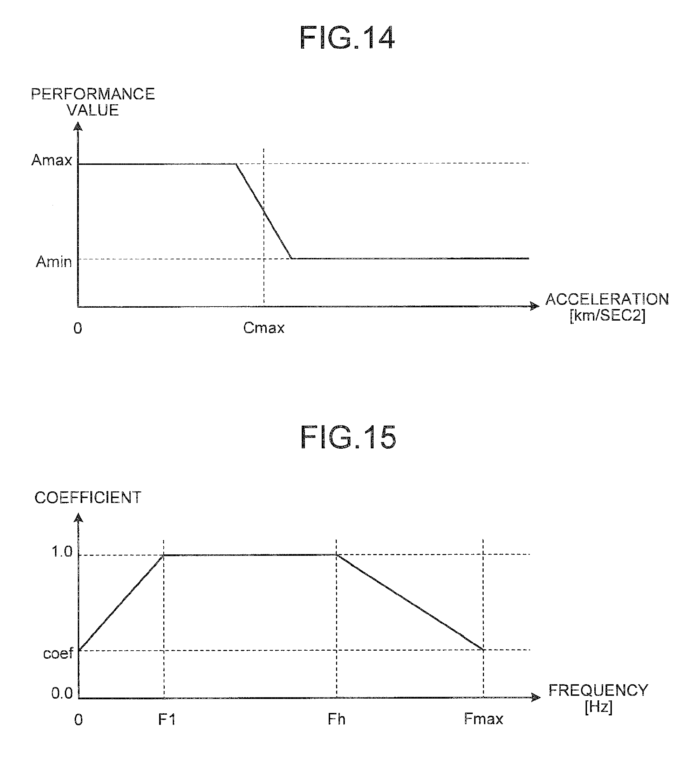

Moreover, regarding the acceleration, it is assumed that the higher the acceleration of the portable radio communication device 10 is, the easier it is for the sound input unit 160 to move away from the lips of the user and thus pick up more surrounding noises. Therefore, as illustrated by the example of FIG. 14, the higher the acceleration detected by the acceleration detecting unit 174 is, the lower the performance value computed by the performance value computing unit 183 is.

The performance value computing unit 183 computes the final performance value on the basis of the performance value computed from the detection result of each detecting unit in this way and outputs the final performance value to the frequency characteristic adjustment amount control unit 184 and the sound pressure adjustment amount control unit 185. In this case, regarding the computation of the final performance value, the final performance value may be calculated as an average value of the performance values computed from the detection results of the detecting units, or the final performance value may be calculated by applying the performance values computed from the detection results of the detecting units to a predetermined mathematical expression.

The frequency characteristic adjustment amount control unit 184 controls the frequency characteristics of the sound input unit 160 on the basis of the performance value input from the performance value computing unit 183. Specifically, the frequency characteristic adjustment amount control unit 184 computes a suppression coefficient for suppressing the frequency component other than a frequency band in which the components of a human voice are large every frequency on the basis of the performance value input from the performance value computing unit 183.

FIG. 15 illustrates an example of the suppression coefficient computed by the frequency characteristic adjustment amount control unit 184. In FIG. 15, "F1" is the lower limit of the frequency band in which the components of a human voice are large. For example, FI is 10OHz. Moreover, "Fh" is the upper limit of the frequency band in which the components of a human voice are large. For example, Fh is 1500Hz. Moreover, "coef" is a coefficient computed based on the performance value input from the performance value computing unit 183. By using 1.0 as an upper limit, the lower the performance value input from the performance value computing unit 183 is, the closer coef becomes a value to zero.

As illustrated by the example of FIG. 15, the frequency characteristic adjustment amount control unit 184 computes a suppression coefficient every frequency in such a manner that an upper limit becomes 1.0 in the frequency band of FI to Fh and the more the frequency is distant from the frequency band of FI to Fh, the closer the value is to coef. When the performance value input from the performance value computing unit 183 is low, a component other than a frequency band in which the components of a human voice are large can be reduced and the acquired voice can be cleared up, by multiplying the suppression coefficient computed in this way by the spectrum of the corresponding frequency.

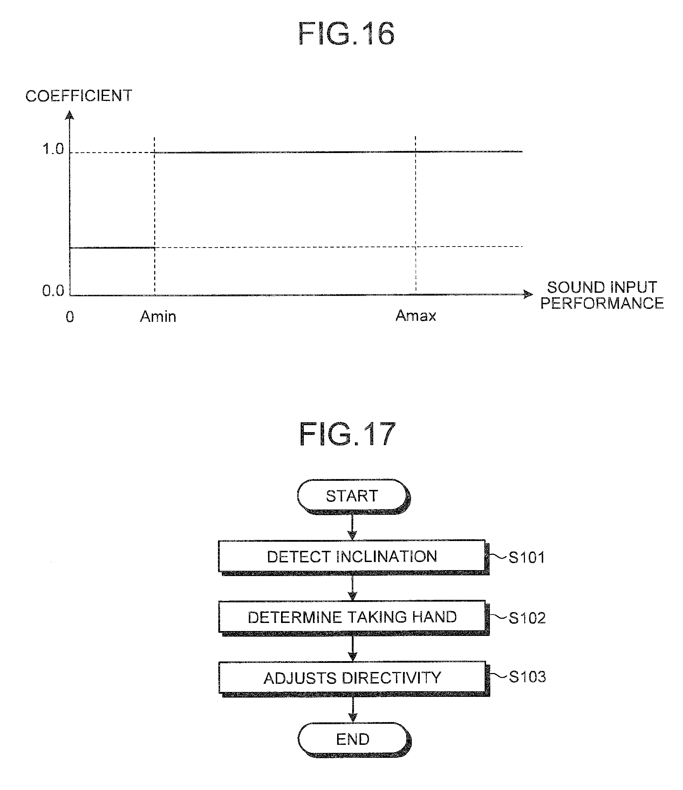

The sound pressure adjustment amount control unit 185 computes a coefficient for adjusting the input sound pressure of the sound input unit 160 on the basis of the performance value input from the performance value computing unit 183. FIG. 16 illustrates an example of the coefficient computed by the sound pressure adjustment amount control unit 185. As illustrated by the example of FIG. 16, the sound pressure adjustment amount control unit 185 computes a coefficient in such a manner that the lower the performance value input from the performance value computing unit 183 is, the smaller the value becomes. When it is assumed that the performance value is low and the noise is large, the input sound pressure is reduced and thus the transfer of the large noise to a communication destination can be suppressed, by adjusting the input sound pressure by using the coefficient computed in this way.

Next, it will be explained about the control processing procedures of the sound input unit 160 performed in the portable radio communication device 10. FIG. 17 is a flowchart illustrating control processing procedures related to directivity. As illustrated in FIG. 17, the inclination detecting unit 171 detects the inclination of the portable radio communication device 10 (Step S101). The taking hand determining unit 181 determines which hand holds the portable radio communication device 10 on the basis of the detection result of the inclination detecting unit 171 (Step S102). Then, the directivity adjustment amount control unit 182 adjusts the directivity of the sound input unit 160 on the basis of the determination result of the taking hand determining unit 181 (Step S103).

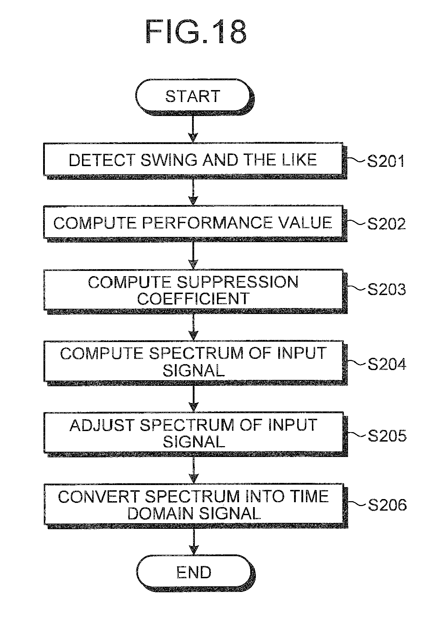

FIG. 18 is a flowchart illustrating control processing procedures related to frequency characteristics. As illustrated in FIG. 18, the swing detecting unit 172 or the like detects a swing and the like (Step S201). The performance value computing unit computes a performance value on the basis of the detection results (Step S202). Then, the frequency characteristic adjustment amount control unit 184 computes a suppression coefficient by using the following Equation (6) and Equation (7) on the basis of the performance value computed by the performance value computing unit 183 (Step S203).

$$\begin{cases} \text{rate}(f) = \text{coef} + \dfrac{(1.0 - \text{coef})f}{F1} & 0 \le f \le F1 \\ \text{rate}(f) = 1.0 & F1 < f < Fh \qquad (6) \\ \text{rate}(f) = 1.0 - \dfrac{(1.0 - \text{coef})(f - Fh)}{F\,\text{max} - Fh} & F1 \le f \le F\,\text{max} \end{cases}$$

$$\text{coef} = \frac{A - A\,\text{min}}{(A\,\text{max} - A\,\text{min})} \qquad (7)$$

In this case, rate(f) is a suppression coefficient to be applied to the frequency f Hz. Moreover, "A" is the performance value input from the performance value computing unit 183. "Amax" is the maximum value of the performance value and "Amin" is the minimum value of the performance value.

The sound input unit 160 computes the spectrum of the acquired voice signal by using Fourier transform (Step S204). Then, the sound input unit 160 multiplies the suppression coefficient of each frequency computed by the frequency characteristic adjustment amount control unit 184 by the spectrum of the corresponding frequency as illustrated in the following Equation (8) and Equation (9) (Step S205).

$$\text{mod}\,Re(f) = \text{rate}(f) * Re(f) \qquad (8)$$

$$\text{mod}\,Im(f) = \text{rate}(f) * Im(f) \qquad (9)$$

In this case, Re(f) is a real part of the spectrum of the frequency f of the input signal and Im(f) is an imaginary part of the spectrum of the frequency f of the input signal. Moreover, modRe(f) is a real part of the spectrum of the frequency f of the input signal after being adjusted by the suppression coefficient and modIm(f) is an imaginary part of the spectrum of the frequency f of the input signal after being adjusted by the suppression coefficient.

Then, the sound input unit 160 converts the spectrum of the adjusted input signal into a signal in the time domain by using inverse Fourier transform (Step S206).

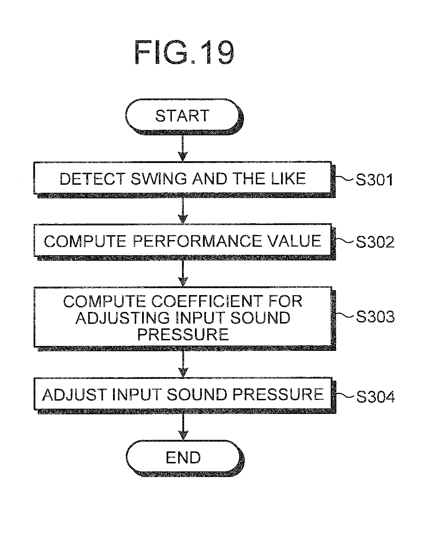

FIG. 19 is a flowchart illustrating control processing procedures related to the input sound pressure. As illustrated in FIG. 19, the swing detecting unit 172 or the like detects a swing and the like (Step S301). The performance value computing unit 183 computes a performance value on the basis of the detection results (Step S302). Then, the sound pressure adjustment amount control unit 185 computes a coefficient for adjusting the input sound pressure on the basis of the performance value computed by the performance value computing unit 183 (Step S303).

Then, the sound input unit 160 adjusts the input sound pressure as in the following Equation (10) by using the coefficient computed by the sound pressure adjustment amount control unit 185 (Step S304).

$$\text{Mod}(P) = \text{rate} * P \qquad (10)$$

In this case, "rate" is a coefficient computed by the sound pressure adjustment amount control unit 185. Moreover, "P" is an input sound pressure before adjustment and Mod(P) is an input sound pressure after adjustment.

As described above, in the present embodiment, because the sound input unit 160 is controlled in accordance with the result obtained by detecting the situation of the portable radio communication device 10, the quality of the voice acquired by the sound input unit 160 can be improved in accordance with the situation of the portable radio communication device 10.

As described above, according to an aspect of the portable radio communication device and the control method thereof disclosed in the present application, the quality of voices that are input in accordance with situations can be improved.

## Claims

**1.** A portable radio communication device (10) comprising:

a sound input unit (160) that acquires a sound and converts the sound into an electrical signal;
a situation detecting unit (170) that detects a situation of the device (10); and
a control unit (180) that controls the sound input unit (160) in accordance with the detection result of the situation detecting unit (170).

**2.** The portable radio communication device (10) according to claim 1, wherein
the situation detecting unit (170) detects an inclination of the device, and
the control unit (180) controls directivity of the sound input unit (160) in accordance with the inclination detected by the situation detecting unit (170).

**3.** The portable radio communication device (10) according to claim 2, wherein the control unit (180) determines which hand of a user holds the device on the basis of the inclination detected by the situation detecting unit (170) and controls directivity of the sound input unit (160) in accordance with the hand that holds the device (10).

**4.** The portable radio communication device (10) according to claim 1, wherein
the situation detecting unit (170) detects a frequency of swing of the device, and
the control unit (180) controls at least one of a frequency characteristic and an input sound pressure of the sound input unit (160) in accordance with the frequency of swing detected by the situation detecting unit (170).

**5.** The portable radio communication device (10) according to claim 1, wherein
the situation detecting unit (170) detects a moving speed of swing of the device, and
the control unit (180) controls at least one of a frequency characteristic and an input sound pressure of the sound input unit (160) in accordance with the moving speed of swing detected by the situation detecting unit (170).

**6.** The portable radio communication device (10) according to claim 1, wherein
the situation detecting unit (170) detects an acceleration of swing of the device, and
the control unit (180) controls at least one of a frequency characteristic and an input sound pressure of the sound input unit (160) in accordance with the acceleration of swing detected by the situation detecting unit (170).

**7.** A control method for controlling a portable radio communication device (10) that includes a sound input unit (160) that acquires a sound and converts the sound into an electrical signal, the control method comprising:

detecting a situation of the portable radio communication device (10); and
controlling the sound input unit (160) in accordance with a detection result at the detecting.

**8.** The control method according to claim 7, wherein
the detecting includes detecting an inclination of the portable radio communication device (10), and
the controlling includes controlling directivity of the sound input unit (160) in accordance with the detected inclination.

**9.** The control method according to claim 8, wherein the controlling includes determining which hand of a user holds the device (10) on the basis of the detected inclination and controls directivity of the sound input unit (160) in accordance with the hand that holds the device (10).

**10.** The control method according to claim 7, wherein
the detecting includes detecting a frequency of swing of the portable radio communication device (10), and
the controlling includes controlling at least one of a frequency characteristic and an input sound pressure of the sound input unit (160) in accordance with the frequency of swing detected at the detecting.

**11.** The control method according to claim 7, wherein
the detecting includes detecting a moving speed of the portable radio communication device (10), and
the controlling includes controlling at least one of a frequency characteristic and an input sound pressure of the sound input unit (160) in accordance with the detected moving speed.

12. The control method according to claim 7, wherein
    the detecting includes detecting an acceleration of the portable radio communication device (10), and
    the controlling includes controlling at least one of a frequency characteristic and an input sound pressure of the sound input unit (160) in accordance with the detected acceleration.

# FIG.1

# FIG.2

# FIG.3

# FIG.4

# FIG.5

RANGE OF ANGLE
WHEN BEING HELD IN
LEFT HAND

RANGE OF ANGLE
WHEN BEING HELD IN
RIGHT HAND

-180    Lmin    Lmax    0    Rmin    Rmax    180    INCLINATION OF DEVICE

# FIG.6

START

S11 DETECT INCLINATION OF DEVICE

S12 Lmin< $\theta$ <Lmax? — YES

NO

S14 Rmin< $\theta$ <Rmax? — YES

NO S16 UNCLEAR DETERMINATION

S15 RIGHT HAND DETERMINATION

S13 LEFT HAND DETERMINATION

END

# FIG.7

START

DETECT INCLINATION $\theta$1 TO AXIS 1 OF DEVICE ～S21

DETECT INCLINATION $\theta$2 TO AXIS 2 OF DEVICE ～S22

DETECT INCLINATION $\theta$3 TO AXIS 3 OF DEVICE ～S23

S24

R1min< $\theta$1<R1max &&
R2min< $\theta$2<R2max &&
R3min< $\theta$3<R3max?

NO

YES

S25

RIGHT HAND DETERMINATION

S26

L1min< $\theta$1<L1max &&
L2min< $\theta$2<L2max &&
L3min< $\theta$3<L3max?

NO

YES

S27

LEFT HAND DETERMINATION

S28

UNCLEAR DETERMINATION

END

14

# FIG.8

SOUND COLLECTING
DIRECTION

SOUND
COLLECTING
RANGE

HEAD OF USER

10

# FIG.9

START

INPUT DETERMINATION
RESULT FOR TAKING
HAND — S31

IS IT LEFT HAND? — S32 → YES

NO

IS IT RIGHT HAND? — S35 → YES

NO

SETS SOUND
COLLECTING DIRECTION
TO a DEGREES — S38

SETS SOUND
COLLECTING
DIRECTION TO b
DEGREES — S36

SETS SOUND
COLLECTING
DIRECTION TO c
DEGREES — S33

SETS SOUND
COLLECTING RANGE TO d
DEGREES — S39

SETS SOUND
COLLECTING RANGE
TO e DEGREES — S37

SETS SOUND
COLLECTING RANGE
TO f DEGREES — S34

END

# FIG.10

STANDARD
INCLINATION

INCLINATION
OF DEVICE

CROSS SECTION
OF DEVICE

DEVIATED ANGLE $\theta$ FROM
STANDARD

# FIG.11

PERFORMANCE
VALUE

Amax

Amin

0

$\theta$ max

DEVIATED
ANGLE

# FIG.12

# FIG.13

# FIG.14

# FIG.15

# FIG.16

COEFFICIENT

1.0 ┊

0.0

0          Amin                              Amax          SOUND INPUT PERFORMANCE

# FIG.17

START

DETECT INCLINATION — S101

DETERMINE TAKING HAND — S102

ADJUSTS DIRECTIVITY — S103

END

# FIG.18

START

DETECT SWING AND THE LIKE — S201

COMPUTE PERFORMANCE VALUE — S202

COMPUTE SUPPRESSION COEFFICIENT — S203

COMPUTE SPECTRUM OF INPUT SIGNAL — S204

ADJUST SPECTRUM OF INPUT SIGNAL — S205

CONVERT SPECTRUM INTO TIME DOMAIN SIGNAL — S206

END

# FIG.19

```
        ┌─────────────┐
        │    START    │
        └──────┬──────┘
               ↓
┌──────────────────────────────┐
│  DETECT SWING AND THE LIKE    │──S301
└───────────────┬──────────────┘
                ↓
┌──────────────────────────────┐
│  COMPUTE PERFORMANCE VALUE    │──S302
└───────────────┬──────────────┘
                ↓
┌──────────────────────────────┐
│   COMPUTE COEFFICIENT FOR     │
│   ADJUSTING INPUT SOUND       │──S303
│         PRESSURE              │
└───────────────┬──────────────┘
                ↓
┌──────────────────────────────┐
│  ADJUST INPUT SOUND PRESSURE  │──S304
└───────────────┬──────────────┘
                ↓
        ┌─────────────┐
        │     END     │
        └─────────────┘
```

Europäisches
Patentamt

European
Patent Office

Office européen
des brevets

# EUROPEAN SEARCH REPORT

**Application Number**

EP 10 16 4102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/207264 A1 (HARMKE CHARLES B [US]) 28 August 2008 (2008-08-28) <br> * paragraph [0001] * <br> * paragraph [0017] - paragraph [0025] * <br> * figures 1-5 * <br> ----- | 1-12 | INV. <br> H04M1/60 <br> G10L21/02 |
| A,D | JP 2000 270067 A (NEC CORP) 29 September 2000 (2000-09-29) <br> * abstract * <br> ----- | 1-12 | |
| | | | **TECHNICAL FIELDS SEARCHED (IPC)** <br><br> H04M <br> G10L <br> G10K <br> H04R <br> H01R |

The present search report has been drawn up for all claims

| Place of search | Date of completion of the search | Examiner |
|---|---|---|
| Munich | 28 September 2010 | Pinilla-Ariza, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 4102

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2010

| Patent document cited in search report | Publication date | Patent family member(s) | Publication date |
|---|---|---|---|
| US 2008207264 A1 | 28-08-2008 | AU 2008219544 A1<br>CA 2676287 A1<br>WO 2008106257 A1 | 04-09-2008<br>04-09-2008<br>04-09-2008 |
| JP 2000270067 A | 29-09-2000 | GB 2348077 A<br>US 6731912 B1 | 20-09-2000<br>04-05-2004 |

EPO FORM P0459

For more details about this annex : see Official Journal of the European Patent Office, No. 12/82

**REFERENCES CITED IN THE DESCRIPTION**

**Patent documents cited in the description**

• JP 2000270067 A